# EUROPEAN PATENT SPECIFICATION

(11) **EP 3 020 962 B1**
(45) Date of publication and mention of the grant of the patent: **28.03.2018**
(21) Application number: 15179515.0
(22) Date of filing: 03.08.2015
(51) Int. Cl.: F03D 7/04, F03D 17/00

(54) **WIND TURBINE POWER GENERATION FACILITY**
WINDTURBINENSTROMERZEUGUNGSANLAGE
INSTALLATION DE GÉNÉRATION D'ÉNERGIE ÉOLIENNE

(30) Priority: 14.11.2014 JP 2014231167
(43) Date of publication of application: 18.05.2016
(73) Proprietor: MITSUBISHI HEAVY INDUSTRIES, LTD., Tokyo 108-8215 (JP)
(72) Inventor: MIZOUE, Taketo, TOKYO, 108-8215 (JP); ICHINOSE, Hidekazu, TOKYO, 108-8215 (JP)
(74) Representative: Intès, Didier Gérard André

(56) References cited:
- EP-A2- 2 063 112
- US-A1- 2009 160 189
- US-A1- 2009 204 266
- US-A1- 2012 066 544
- US-A1- 2012 191 249
- US-A1- 2013 221 676

## Description

### TECHNICAL FIELD

The present disclosure relates to a wind turbine power generation facility.

### BACKGROUND

For a wind turbine generator, it is known to use Supervisory Control And Data Acquisition (SCADA) which collects data of an operation state of a wind turbine generator to use the data for control, and a condition-monitoring system for monitoring a condition of a wind turbine generator, or Condition Monitoring System (CMS).

For instance, Patent Document 1 discloses a method of operating a wind turbine generator using a SCADA system. This SCADA system collects information from an anemometer or various sensors to generate and transmit control signals based on the collected information to a wind turbine, and to analyze the collected information to transmit signals for displaying the information to a display dynamically and visually.

Further, Patent Document 2 describes using CMS to diagnose malfunction of a constituent unit of a wind turbine generator which is to be monitored. This CMS collects measurement data which indicates vibration of a gear, a bearing, or the like using a vibration sensor to diagnose malfunction based on an analysis result of the collected measurement data.

### Citation List

### Patent Literature

Patent Document 1: US 8180498B
Patent Document 2: US 2013/0261988A
Patent document 3: US 2009/204266 A1

### SUMMARY

In accordance with an increase in the output of wind turbine generators in recent years, the structure of wind turbine generators also tends to increase in size, and the amount of data obtained by SCADA and CMS also tends to increase.

As a result of such increase in the amount of data processed by SCADA and CMS, data congestion may occur in a data transmission path of SCADA and CMS in a case where SCADA and CMS are both provided for a wind turbine power generation facility. Especially in CMS, the measurement data is sometimes obtained at a high sampling frequency as compared to SCADA, which increases the amount of data transmitted by CMS. The large amount of data of CMS (measurement side) uses a considerable part of communication capacity of the transmission path, which may lead to a communication trouble such as delay in transmission of control signals from a control unit to a control-target device via the transmission path, thereby raising a risk of shutdown of the wind turbine generator, for instance.

In this regard, none of Patent Documents 1 and 2 discloses a measure for avoiding the risk that a communication trouble occurs at the control side due to a shortage in the communication capacity of the transmission path when a large amount of measurement data is processed.

In view of the above issues, the object of the present invention is to provide a wind turbine power generation facility, according to independent claim 1, whereby it is possible to avoid communication troubles at a control side due to a shortage in the communication capacity of a transmission path when a large amount of measurement data is processed.
(1) A wind turbine power generation facility according to at least one embodiment of the present invention includes: a wind turbine generator including a tower, a nacelle disposed on an upper part of the tower and supported on the tower, a wind turbine rotor supported rotatably on the nacelle, and a generator configured to be driven by rotation energy of the wind turbine rotor; a supervisory control system for controlling operation of the wind turbine generator, including at least one control unit disposed on a rotor hub of the wind turbine rotor or on the nacelle, a SCADA server disposed outside the wind turbine generator for receiving and processing information from the control unit, and an information transmission medium for control connecting the at least one control unit and the SCADA server; and a condition-monitoring system including at least one measurement unit disposed on the rotor hub or the nacelle, a CMS server disposed outside the wind turbine generator for receiving and processing information from the at least one measurement unit, and an information transmission medium for measurement connecting the at least one measurement unit and the CMS server, the condition-monitoring system being configured to collect at least data related to vibration of the wind turbine generator by the at least one measurement unit and to monitor a condition of the wind turbine generator based on the data related to the vibration.
   The information transmission medium for control and the information transmission medium for measurement are separated from each other.
   In the above configuration (1), the information transmission medium for control connecting the control unit and the SCADA server and the information transmission medium for measurement for connecting the measurement unit and the CMS server in the condition-monitoring system are separated from each other. In this way, the communication state of an information transmission medium of one system does not affect the communication state of an information transmission medium of the other system. Thus, even if there is congestion of data in the information transmission medium for measurement of the condition-monitoring system for collecting data related to vibration at a high sampling frequency, a failure would not occur in communication to cause delay in communication of the information transmission medium for control of the supervisory control system.
   As a result, it is possible to avoid a risk that a failure occurs in communication of the control side due to a shortage of communication capacity of the transmission path in a case where a large amount of measurement-side data is processed.
(2) In some embodiments, in the above configuration (1), the information transmission medium for control and the information transmission medium for measurement are each arranged so as to extend through an inside of the tower.
(3) In some embodiments, in the above configuration (1) or (2), the at least one measurement unit includes a vibration sensor for measuring vibration of at least one of the generator or a drivetrain for transmitting the rotation energy of the wind turbine rotor to the generator. The data related to the vibration of the wind turbine generator includes data based on a measurement result of the vibration sensor.
   With the above configuration (3), in a case where the condition of the wind turbine generator is monitored on the basis of the data related to vibration of the drivetrain or the generator measured by using the vibration sensor in the condition-monitoring system, it is possible to avoid a risk that a failure occurs in communication of the control side due to a shortage of communication capacity of the transmission path at the measurement side caused by data related to vibration measured at a relatively high sampling frequency.
(4) In some embodiments, in the above configuration (3), the drivetrain includes a main shaft connected to the rotor hub of the wind turbine rotor, a main bearing which supports the main shaft rotatably, and a transmission disposed between the main shaft and the generator. The vibration sensor is configured to measure vibration of at least one of the main shaft, the main bearing or the transmission.
   With the above configuration (4), in a case where the condition of the wind turbine generator is monitored on the basis of the data related to vibration of the main shaft, the main bearing or the transmission measured by using a vibration sensor in the condition-monitoring system, it is possible to avoid a risk that a failure occurs in communication of the control side due to a shortage of communication capacity of the transmission path at the measurement side caused by data related to vibration measured at a relatively high sampling frequency.
(5) In some embodiments, in the above configuration (4), the transmission includes a hydraulic pump configured to be driven by the main shaft to pressurize working oil and generate pressurized oil, a hydraulic motor configured to be driven by the pressurized oil generated by the hydraulic pump, a high pressure line connecting an outlet side of the hydraulic pump and an inlet side of the hydraulic motor, and a low pressure line connecting an outlet side of the hydraulic motor and an inlet side of the hydraulic pump. The vibration sensor is configured to measure vibration of at least one of the hydraulic pump, the hydraulic motor, the high pressure line or the low pressure line.
   With the above configuration (5), in a case where the condition of the wind turbine generator is monitored on the basis of the data related to vibration of the hydraulic pump, the hydraulic motor, the high pressure line or the low pressure line measured by using a vibration sensor in the condition-monitoring system, it is possible to avoid a risk that a failure occurs in communication of the control side due to a shortage of communication capacity of the transmission path at the measurement side caused by data related to vibration measured at a relatively high sampling frequency.
(6) In some embodiments, in any one of the above configurations (1) to (5), the wind turbine generator includes a hydraulic pump configured to be driven by the rotation energy of the wind turbine rotor, a hydraulic motor configured to be driven by pressurized oil generated by the hydraulic pump and to input mechanical energy to the generator, a high pressure line connecting an outlet side of the hydraulic pump and an inlet side of the hydraulic motor, and a low pressure line connecting an outlet side of the hydraulic motor and an inlet side of the hydraulic pump.
   Each of the hydraulic pump and the hydraulic motor includes a rotation shaft, a piston configured to reciprocate in relation to rotation of the rotation shaft, and a cylinder forming a working chamber together with the piston.
   The at least one measurement unit includes a pressure sensor for measuring a pressure inside at least one of the cylinder of the hydraulic pump, the cylinder of the hydraulic motor, the high pressure line or the low pressure line.
   The condition-monitoring system is configured to further collect data based on a measurement result by the pressure sensor and to monitor the condition of the wind turbine generator on the basis of the data based on the measurement result of the pressure sensor.
   In the above configuration (6), since the information transmission medium for control and the information transmission medium for measurement are separated from each other, even in a case where pressure data is obtained to be monitored at a relatively high sampling frequency in addition to the vibration data in the condition-monitoring system, the communication capacity of the information transmission medium for control would not become short due to an increase in the amount of data transmitted through the information transmission medium for measurement. Thus, with the above configuration (6), it is possible to avoid a risk that a failure occurs in communication of the control side due to a shortage of communication capacity of the transmission path at the measurement side caused by data related to vibration measured at a relatively high sampling frequency.
(7) In some embodiments, in any one of the above configurations (1) to (6), the measurement unit and the control unit are connected to each other via a communication line disposed independently from the information transmission medium for control and the information transmission medium for measurement.
   The measurement unit is configured to determine whether an abnormality of the wind turbine generator is present on the basis of the data related to the vibration and to generate an abnormality determination signal.
   The control unit is configured to receive the abnormality determination signal from the measurement unit via the communication line and to control the operation of the wind turbine generator on the basis of the abnormality determination signal.
   With the above configuration (7), since the measurement unit of the condition-monitoring system and the control unit of the supervisory control system are connected by the communication line which is independent from the information transmission medium for control and the information transmission medium for measurement, communication between the control unit and the measurement unit via the communication line is available while a state in which the information transmission medium for control and the information transmission medium for measurement are separated is maintained.
   Further, since the measurement data measured by the measurement unit is used to control the wind turbine generator by the control unit, the data obtained in the measurement can be utilized not only in the condition-monitoring system but also in the supervisory control system.
   Accordingly, with the above configuration (7), it is possible to use the measurement data in the condition-monitoring system also in the supervisory control system effectively while maintaining the separation of the information transmission medium for control and the information transmission medium for measurement.
(8) In some embodiments, in the above configuration (7), the information transmission medium for control and the information transmission medium for measurement are each composed of Ethernet cables, and the communication line is composed of CAN cables.
(9) In some embodiments, in any one of the above configurations (1) to (8), the supervisory control system further includes a control-side data accumulation part configured to accumulate data to be transmitted from the control unit to the SCADA server at least temporarily, or the condition-monitoring system further includes a measurement-side data accumulation part configured to accumulate data to be transmitted from the measurement unit to the CMS server at least temporarily. The wind turbine power generation facility is configured to accumulate data failing to be transmitted to the SCADA server or the CMS server due to the failure in the communication in the control-side data accumulation part or the measurement-side data accumulation part, and to transmit the data accumulated in the control-side data accumulation part or the measurement-side data accumulation part to the SCADA server or the CMS server after recovery of the communication, if there is a failure in communication between the control unit and the SCADA server or between the measurement unit and the CMS server.
   In the above configuration (9), a data accumulation part is provided for the supervisory control system or the condition-monitoring system, and if data is not transmitted from the control unit or the measurement unit to the SCADA server or the CMS server normally due to a failure in communication, the data is accumulated in the data accumulation part, and then the accumulated data is transmitted to the SCADA server or the CMS server after recovery of the communication. In this way, even if there is a failure in communication between the control unit or the measurement unit disposed on the wind turbine generator and the SCADA server or the CMS server disposed outside the wind turbine generator, it is possible to transmit information from the control unit or the measurement unit to the SCADA server or the CMS server without losing the information.
(10) In some embodiments, in any one of the above configurations (1) to (9), the wind turbine generator is placed on ocean, the SCADA server and the CMS server are placed on land, and the information transmission medium for control and the information transmission medium for measurement each include a cable disposed underwater.
   With the above configuration (10), the control unit or the measurement unit disposed on the ocean and the SCADA server or the CMS server disposed on the land are connected via the cable disposed under the ocean. Thus, even when there is a failure in communication between the control unit or the measurement unit and the SCADA server or the CMS server such as a cutoff of the cable, it is possible to transmit information from the control unit or the measurement unit to the SCADA server or the CMS server without losing the information.
(11) In some embodiments, in any one of the above configurations (1) to (10), each of the supervisory control system and the condition-monitoring system is connected to the Internet via a router.
   With the above configuration (11), it is possible to monitor or control the operation condition or the state of the wind turbine generator via the Internet from a place distant from the supervisory control system and the condition-monitoring system.
(12) In some embodiments, in any one of the above configurations (1) to (11), the at least one control unit or the at least one measurement unit is disposed on the rotor hub. The information transmission medium for control or the information transmission medium for measurement connecting the control unit or the measurement unit disposed on the rotor hub and the SCADA server or the CMS server includes a wireless LAN.
   With the above configuration (12), since a wireless LAN is used as the information transmission medium connecting the control unit or the measurement unit disposed on the rotor hub which rotates relative to the nacelle and the SCADA server or the CMS server, it is possible to dispense with cable arrangement of the information transmission medium between the rotor hub and the nacelle. Further, while a structure for preventing twist of cables due to rotation of the rotor hub relative to the nacelle, such as a slip ring, is required in a case where cables of the information transmission medium are disposed between the rotor hub and the nacelle, it is possible to form an information transmission path for control or a information transmission path for measurement between the rotor hub and the nacelle without a slip ring in the above configuration (12). In this way, it is simple to simplify the cable arrangement in the wind turbine generator.
(13) In some embodiments, in any one of the above configurations (1) to (12), the control unit includes a yaw controller for controlling a yaw angle of the wind turbine generator and a pitch controller for controlling a pitch angle of at least one blade mounted to the rotor hub. The supervisory control system is configured to control an output of the wind turbine generator using the yaw controller or the pitch controller.
   In the above configuration (13), in the wind turbine generator in which the output is controlled by the yaw control or the pitch control, even when data is congested in the information transmission medium for measurement of the condition-monitoring system which collects data related to vibration at a high sampling frequency, a failure does not occur in communication to cause communication delay in the information transmission medium for control of the supervisory control system due to the above data congestion in the information transmission medium for measurement. Thus, it is possible to control the output of the wind turbine generator by the yaw control or the pitch control securely without causing a failure in communication at the control side due to an overflow of the measurement-side data in the transmission path.
(14) In some embodiments, in any one of the above configuration (5) or (6), the control unit includes a hydraulic transmission controller for controlling a displacement of the hydraulic pump or the hydraulic motor. The supervisory control system is configured to control an output of the wind turbine generator using the hydraulic transmission controller.
   In the above configuration (14), in the wind turbine generator in which the output is controlled by control of a displacement of the hydraulic pump or the hydraulic motor, even when data is congested in the information transmission medium for measurement of the condition-monitoring system which collects data related to vibration or pressure at a high sampling frequency, a failure does not occur in communication to cause delay in communication due to an overflow in communication in the information transmission medium for control of the supervisory control system caused by the congestion of data in the information transmission medium for measurement. Thus, it is possible to control the output of the wind turbine generator by control of the displacement of the hydraulic pump or the hydraulic motor without causing a failure in communication at the control side due to an overflow of the measurement-side data in the transmission path.
(15) In some embodiments, in any one of the above configurations (1) to (14), the SCADA server or the CMS server is configured to perform a statistical processing on the data received from the control unit or the measurement unit.

At least one of the supervisory control system or the condition-monitoring system further includes a display part for displaying a time-series change of the statistically processed data.

With the above configuration (15), data from the control unit or the measurement unit is processed statistically, and the time-series change of the statistically processed data is displayed visually as, for instance, a graph. Thus, it is possible to determine the trend of change in the operation conditions or the state of the wind turbine generator easily.

According to at least one embodiment of the present invention, provided is a wind turbine power generation facility whereby it is possible to avoid a risk of occurrence of a failure in communication at the control side due to an overflow of measurement-side data in a transmission path.

### BRIEF DESCRIPTION OF DRAWINGS

FIG. 1 is a schematic diagram of a configuration of a wind turbine generator according to at least one embodiment of the present invention.
FIG. 2 is a schematic diagram of a configuration of a wind turbine power generation facility according to one embodiment.
FIG. 3 is a schematic diagram of a network configuration of the wind turbine power generation facility illustrated in FIG. 2.
FIG. 4 is a schematic diagram of a configuration of a hydraulic motor according to one embodiment.
FIG. 5 is a schematic diagram of a pitch-drive mechanism according to one embodiment.
FIG. 6 is a schematic diagram of a configuration of a hydraulic pump according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

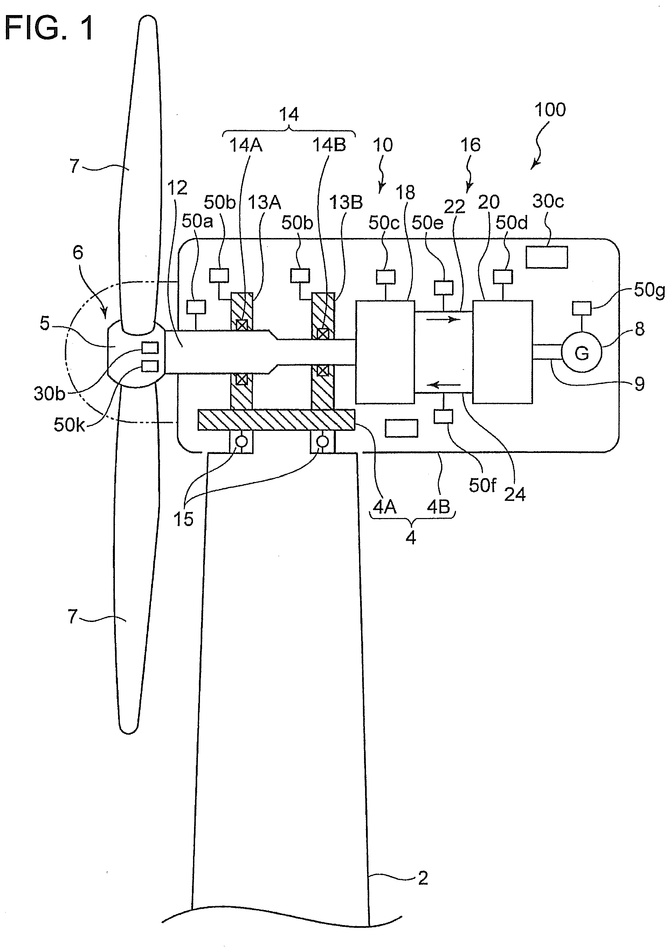

First, described below with reference to FIG. 1 is the schematic configuration of a wind turbine generator included in a wind turbine power generation facility according to one embodiment. FIG. 1 is a schematic diagram of a configuration of a wind turbine generator according to at least one embodiment of the present invention.

As illustrated in FIG. 1, the wind turbine generator 100 includes a tower 2, a nacelle 4 disposed on an upper part of the tower 2 and supported on the tower 2, a wind turbine rotor 6, and a generator 8 configured to be driven by rotation energy of the wind turbine rotor 6. The wind turbine rotor 6 includes a rotor hub 5 and a blade 7 mounted to the rotor hub 5. The wind turbine rotor 6 is supported rotatably to the nacelle 4.

In the wind turbine generator 100 illustrated in FIG. 1, rotation energy of the wind turbine rotor 6 is transmitted to the generator 8 via a drivetrain 10.

The drivetrain 10 of the wind turbine generator 100 illustrated in FIG. 1 includes a main shaft 12 connected to the rotor hub of the wind turbine rotor 6, a main bearing 14 supporting the main shaft 12 rotatably, and a transmission 16.

Here, various devices including the main shaft 12 may be housed in the nacelle 4 disposed on the tower 2 erected on ocean or ground, and be covered by a nacelle cover 4B of the nacelle 4.

Further, the tower 2 may support a nacelle base plate 4A of the nacelle 4 via a yaw slewing bearing 15.

In the wind turbine generator 100 illustrated in FIG. 1, the main shaft 12 is supported to the nacelle 4 by a pair of main bearing 14 (14A, 14B). The pair of main bearings 14 (14A, 14B) may be housed in respective bearing casings 13 (13A, 13B).

The transmission 16 of the wind turbine generator 100 illustrated in FIG. 1 includes a hydraulic pump 18 and a hydraulic motor 20. The transmission 16 further includes a high pressure line 22 and a low pressure line 24 connecting the hydraulic pump and the hydraulic motor. The hydraulic pump 18 is configured to be driven by rotation energy of the wind turbine rotor 6. The hydraulic motor 20 is configured to be driven by pressurized oil generated by the hydraulic pump 18, thereby inputting mechanical energy into the generator 8 via a generator shaft 9. The high pressure line 22 connects the outlet side of the hydraulic pump 18 and the inlet side of the hydraulic motor 20. The low pressure line 24 connects the outlet side of the hydraulic motor 20 and the inlet side of the hydraulic pump 18.

In one embodiment, the transmission 16 may be a gear-type speed increasing unit configured to increase the rotation speed of the main shaft 12 and to transmit the rotation to the generator shaft 9.

In one embodiment, the wind turbine generator 100 may be a direct-drive type wind turbine generator in which the generator 8 is driven by rotation of the main shaft 12 without using a drivetrain.

At least one control unit 30 is disposed on the rotor hub 5 or the nacelle 4 of the wind turbine rotor 6. Further, at least one measurement unit 50 is disposed on the rotor hub 5 or the nacelle 4 of the wind turbine rotor 6.

The control unit 30 constitutes a part of a supervisory control (SCADA) system for controlling operation of the wind turbine generator 100. Further, the measurement unit 50 constitutes a condition-monitoring system (CMS) for monitoring a condition of the wind turbine generator 100.

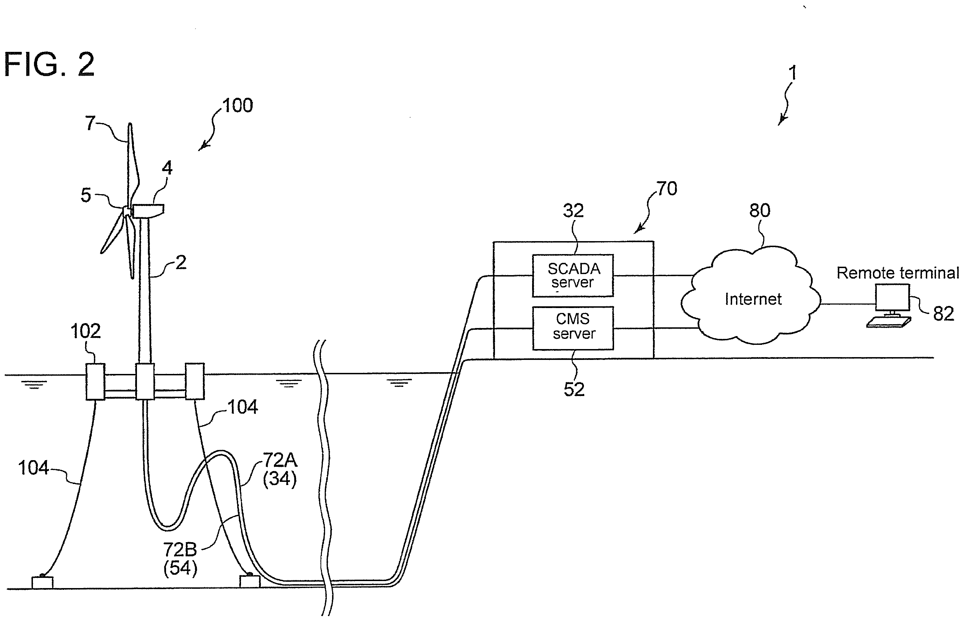

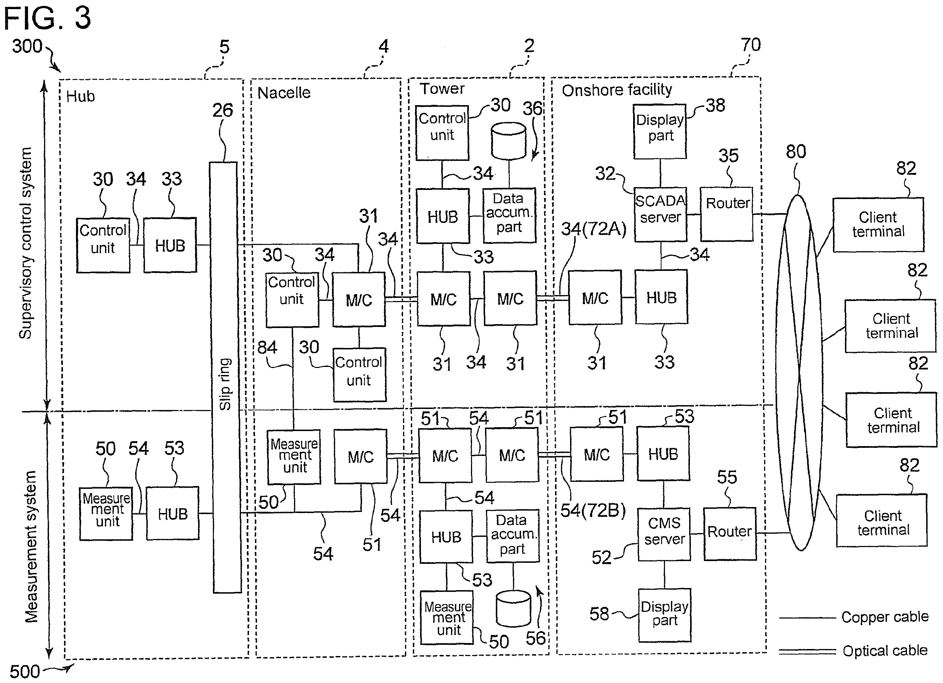

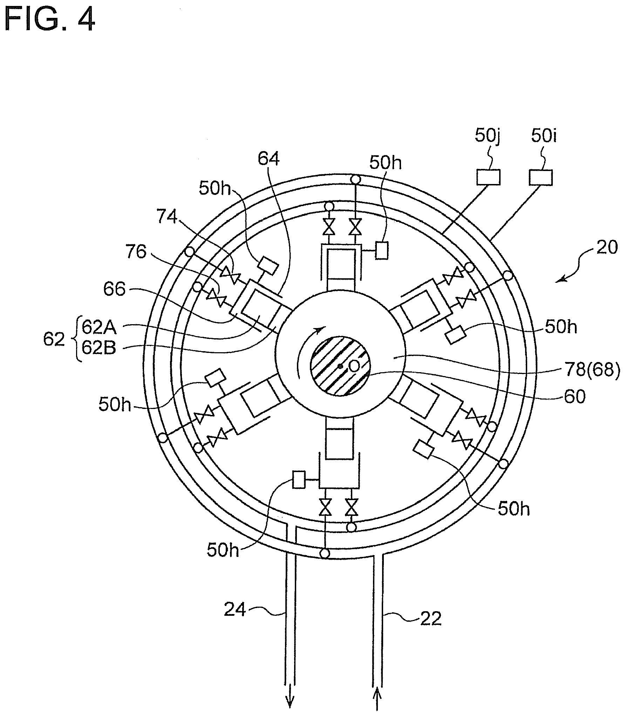

Next, with reference to FIGs. 2 to 4, the wind turbine power generation facility according to one embodiment will be described. FIG. 2 is a schematic diagram of a configuration of a wind turbine power generation facility according to one embodiment. FIG. 3 is a schematic diagram of a network configuration of the wind turbine power generation facility illustrated in FIG. 2. FIG. 4 is a schematic diagram of a configuration of a hydraulic motor according to one embodiment.

The wind turbine power generation facility 1 according to one embodiment includes, for instance, the wind turbine generator 100 described with reference to FIG. 1, a supervisory control (SCADA) system 300 (see FIG. 3) for controlling operation of the wind turbine generator 100 and a condition-monitoring system 500 (CMS, see FIG. 3) for monitoring a condition of the wind turbine generator 100.

In the wind turbine power generation facility 1 illustrated in FIG. 2, the wind turbine generator 100 is a floating-body type wind turbine generator disposed on a floating body 102 floating on the ocean. The floating body 102 is moored by a mooring device 104 to be fixed to the ocean bottom.

As illustrated in FIG. 3, the supervisory control system 300 includes control units 30 (illustrated in FIG. 1 as 30a to 30c) disposed on the rotor hub 5 or the nacelle 4 of the wind turbine rotor 6 of the wind turbine generator 100, and a SCADA server 32 disposed on an onshore facility 70 (see FIG> 2) outside the wind turbine generator 100. The control units 30 and the SCADA server 32 are connected to each other by an information transmission medium for control 34. The SCADA server is configured to receive information from the control units 30 via the information transmission medium for control 34 and to process the information.

In one embodiment, the information transmitted from the control unit 30 to the SCADA server 32 includes, for instance, information indicating an operation condition of the wind turbine generator 100 such as the wind velocity, a rotation speed of the main shaft, a pitch angle of the blade 7, a generator output or a temperature of a constituent device of the wind turbine generator 100.

In one embodiment, the control unit 30 controls the wind turbine generator 100 on the basis of the above information.

As illustrated in FIG. 3, the condition-monitoring system 500 includes measurement units 50 (illustrated in FIG. 1 as 50a to 50k) disposed on the rotor hub 5 of the wind turbine rotor 6 or the nacelle 4 of the wind turbine generator 100, and a CMS server disposed on an onshore facility 70 (see FIG. 2) outside the wind turbine generator 100. Each measurement unit 50 and the CMS server 52 are connected to each other via an information transmission medium for measurement 54. The CMS server 52 is configured to receive information from the measurement units 50 via the information transmission medium for measurement 54 and process the information.

In one embodiment, the information transmitted from the measurement unit 50 to the CMS server 52 includes, for instance, information indicating a condition of the wind turbine generator 100 such as vibration of a constituent unit of the wind turbine generator 100, an internal pressure of the hydraulic pump 18 or the hydraulic motor 20, or strain of a structural member that constitutes the wind turbine generator 100.

At least one of the measurement units 50 is configured to collect at least data related to vibration of the wind turbine generator 100, and the condition-monitoring system 500 is configured to monitor a condition of the wind turbine generator 100 on the basis of the data related to vibration.

The data collected by the measurement units 50 such as the vibration data is, for instance, obtained at a sampling frequency of approximately 10kHz. On the other hand, the data indicating the operation state of the wind turbine generator 100 such as the wind velocity collected by the control units 30 is, for instance, obtained at a sampling frequency of approximately 20Hz. As described above, the data collected by the measurement units 50 may be collected at a high frequency as compared to the data collected by the measurement units 50.

In one embodiment, the supervisory control system 300 is configured using a network of the Ethernet standard, and each control unit 30 and the SCADA server 32 are connected to each other using Ethernet cables being an information transmission medium for control 34. In a case where the supervisory control system 300 includes a plurality of control units 30 as in the embodiment illustrated in FIG. 3, the plurality of control units 30 and the SCADA server are connected by the information transmission medium for control 34 via a hub 33.

As the Ethernet cable, for instance, a copper cable or an optical cable can be used. When a plurality of kinds of transmission media such as a copper cable and an optical cable is used as the information transmission medium for control 34, a medium converter (M/C) 31 for mutually converting signals of the respective media may be disposed between transmission media of different types (e.g. between a copper cable and an optical cable).

Similarly, in one embodiment, the condition-monitoring system 500 is configured using a network of the Ethernet standard, and each measurement unit 50 and the CMS server 52 are connected to each other using Ethernet cables being an information transmission medium for measurement 54. In a case where the condition-monitoring system 500 includes a plurality of measurement units 50 as in the embodiment illustrated in FIG. 3, the plurality of measurement units 50 and the CMS server 52 are connected by the information transmission medium for measurement 54 via a hub 53.

As the Ethernet cables, for instance, a copper cable or an optical cable can be used. When a plurality of kinds of transmission media such as a copper cable and an optical cable is used as the information transmission medium for measurement 54, a medium converter (M/C) 51 for mutually converting signals of the respective media may be disposed between transmission media of different types (e.g. between a copper cable and an optical cable).

In one embodiment, the information transmission medium for control 34 and the information transmission medium for measurement 54 are each disposed so as to extend through an inside of the tower 2 (see FIG. 3).

In the wind turbine power generation facility 1 illustrated in FIG. 2, the control unit 30 and the measurement unit 50 disposed on the wind turbine generator 100 erected on the floating body 102 on the ocean and the SCADA server and the CMS server disposed on the onshore facility 70 are connected using underwater cables 72A, 72B disposed under the water. In this case, in the network configuration of FIG. 3, the medium converters 31, 51 disposed inside the tower 2 and the medium converters 31, 51 disposed on the onshore facility 70 are connected by the underwater cables 72A, 72B. The underwater cables 72A, 72B may be optical cables.

In the wind turbine power generation facility 1 illustrated in FIG. 2, the information transmission medium for control 34 and the information transmission medium for measurement 54 are separated from each other. That is, the LAN composing the supervisory control system 300 and the LAN composing the condition-monitoring system 500 are separated from each other, so that the data on the information transmission medium for control 34 is not directly transmitted to the information transmission medium for control 34.

As described above, since the information transmission medium for control 34 and the information transmission medium for measurement 54 are separated from each other, the communication state of an information transmission medium of one system does not affect the communication state of an information transmission medium of the other system. Thus, even if there is congestion of data having occurred in the information transmission medium for measurement 54 of the condition-monitoring system 500 for collecting data related to vibration at a high sampling frequency, a failure would not occur in communication to cause delay in communication of the information transmission medium for control 34 of the supervisory control system 300. Thus, it is possible to avoid a risk that a failure occurs in communication of the control side (the supervisory control system 300 side) due to a shortage of communication capacity of the transmission path in a case where a large amount of measurement-side (the condition-monitoring system 500 side) data is to be processed.

Here, the wind turbine generator 100 is not limited to a floating-body type wind turbine generator, and may be a bottom-mounted offshore wind turbine generator including a base disposed on the ocean bottom and a tower disposed on the base. Further, the wind turbine generator 100 may be an onshore wind turbine generator.

In one embodiment, the measurement unit 50 may be a vibration sensor for measuring vibration of a constituent device of the wind turbine generator 100. The vibration sensor may be an acceleration meter. In this case, it is possible to determine the time-series change of the vibration of a measurement target by obtaining the time-series change of the acceleration of the measurement target.

In one embodiment, the measurement unit 50 is a vibration sensor for measuring vibration of the drivetrain 10.

For instance, as illustrated in FIG. 1, the vibration sensors 50a, 50b may be respectively mounted to the main shaft 12 and the main bearing 14 constituting the drivetrain 10, so that vibration of the main shaft 12 and the main bearing 14 is measured using these vibration sensors.

In one embodiment, as illustrated in FIG. 1, the transmission 16 constituting the drivetrain 10 in the wind turbine generator 100 is a hydraulic transmission. In this case, vibration sensors 50c to 50f may be respectively mounted to the hydraulic pump 18, the hydraulic motor 20, the high pressure line 22 and the low pressure line 24, so as to measure vibration of the constituent devices such as the hydraulic pump 18.

In one embodiment, as illustrated in FIG. 1, a vibration sensor 50g may be mounted to the generator 8 so as to measure vibration of the generator 8.

In one embodiment, the vibration sensors 50a to 50g are disposed inside the nacelle 4.

It is possible to monitor a condition of the wind turbine generator 100 on the basis of data related to vibration of the constituent devices measured by the condition-monitoring system 500 using the above vibration sensors 50a to 50g. For instance, it is possible to display the time-series change in vibration of a constituent device (e.g. the hydraulic motor 20) visually to monitor the change, or to release an alarm if a vibration level of vibration of a constituent device is larger than a threshold value.

In this case, the information transmission medium for control 34 and the information transmission medium for measurement54 are separated. Thus, even if there is a shortage in communication capacity in the transmission path at the measurement side (information transmission medium for measurement 54) due to the data related to vibration measured at a relatively high sampling frequency, it is possible to avoid a risk that a failure occurs in communication at the control side (information transmission medium for control 34) due to the shortage.

Here, a constituent device of the wind turbine generator 100 to which a vibration sensor 50 is attached so as to collect vibration data is not limited to the above described devices. For instance, vibration data may be collected from a frame for supporting devices disposed inside the nacelle 4 using the vibration sensor 50.

In one embodiment, the measurement unit 50 is a pressure sensor for measuring an internal pressure of constituent devices of the wind turbine generator 100.

In one embodiment, as illustrated in FIG. 1, the transmission 16 constituting the drivetrain 10 in the wind turbine generator 100 is a hydraulic transmission. In this case, pressure sensors 50h to 50j for measuring an internal pressure of each constituent device may be respectively mounted to the hydraulic pump 18, the hydraulic motor 20, the high pressure line 22 and the low pressure line 24. The internal pressure of each constituent device of the hydraulic transmission such as the hydraulic pump 18 may be measured by the above pressure sensors 50h to 50j.

Now, the schematic internal configuration of the hydraulic motor 20 will be described as an example of a hydraulic machine (the hydraulic pump 18 and the hydraulic motor 20). Here, the schematic configuration of the hydraulic pump 18 can be described similarly to the hydraulic motor 20.

As illustrated in FIG. 4, the hydraulic motor 20 includes a rotation shaft 60, a piston 62, a cylinder 64, and a conversion mechanism 68. The cylinder 64 forms a working chamber 66 with the piston 62. A high pressure valve 74 capable of switching a communication state between the working chamber 66 and the high pressure line 22, and a low pressure valve 76 capable of switching a communication state between the working chamber 66 and the low pressure line 24 are disposed on the working chamber 66.

The conversion mechanism 68 is a mechanism for performing conversion between a rotational motion of the rotation shaft 60 and a reciprocal motion of the piston 62, and includes a cam 78 having a cam curved surface which contacts the piston 62.

To convert a reciprocal motion of the piston 62 into a rotational motion of the rotation shaft 60 smoothly, the piston 62 preferably includes a piston body portion 62A that slides inside the cylinder 64, and a piston roller or a piston shoe that is attached to the piston body portion 62A. The piston roller or the piston shoe contacts the cam curved surface of the cam 78. In the example illustrated in FIG. 4, the piston 62 includes a piston body portion 62A and a piston shoe 62B.

The piston 62 is configured to reciprocate in relation to rotation of the rotation shaft 60.

In the embodiment illustrated in FIG. 4, the cam 78 is an eccentric cam disposed so as to be eccentric from the shaft center O of the rotation shaft (crank shaft) 60 of the hydraulic motor 20. During a single cycle of the vertical motion of the piston 62, the cam 78 and the rotation shaft 60 to which the cam 78 is attached complete a single rotation.

In another embodiment, the cam 78 is a multi-lobed cam (ring cam) having an annular shape and a plurality of lobes (protrusions). In this case, during a single rotation of the cam 78 and the rotation shaft 60 to which the cam 78 is attached, the piston 62 performs a vertical motion as many times as the number of lobes.

For the hydraulic pump 18 or the hydraulic motor 20 having the above configuration, the pressure sensors 50h to 50j are mounted so as to measure the respective pressures of the cylinder 64, the high pressure line 22, and the low pressure line 24.

In one embodiment, the condition-monitoring system 500 is configured to collect data based on the measurement result of the pressure sensors 50h to 50j and to monitor a condition of the wind turbine generator 100 on the basis of the data based on the measurement result of the pressure sensors 50h to 50j, in addition to the vibration data obtained by the vibration sensors 50a to 50g.

It is possible to determine whether the motion of each constituent device is normal by obtaining and monitoring pressure data of each constituent device using the pressure sensors 50h to 50j. For instance, it is possible to determine whether the piston 62 is normal on the basis of pressure data of a pressure inside the cylinder 64 of the hydraulic pump 18 or the hydraulic motor 20.

The condition-monitoring system 500 having the above configuration obtains and monitors data related to pressures in addition to data related to vibration. Like the vibration data, the data related to pressures may be measured at a relatively-high sampling frequency. Since the information transmission medium for control 34 and the information transmission medium for measurement 54 are separated in the above embodiment, the information transmission medium for control 34 would not be used to its full capacity due to an increase in the amount of data transmitted through the information transmission medium for measurement 54. Thus, it is possible to avoid a risk that a failure occurs in communication at the control side (information transmission medium for control 34 side) due to a shortage in communication capacity of a transmission path due to the data at the measurement side (information transmission medium for measurement 54).

In one embodiment, as illustrated in FIG. 3, the measurement unit 50 and the control unit 30 are connected to each other via a communication line 84 provided independently from the information transmission medium for control 34 and the information transmission medium for measurement 54. The measurement unit 50 is configured to determine whether an abnormality of the wind turbine generator 100 is present, and to generate an abnormality determination signal. Further, the control unit 30 is configured to receive the abnormality signal from the measurement unit 50 via the communication line 84, and to control operation of the wind turbine generator 100 on the basis of the abnormality determination signal.

For instance, the vibration sensor 50 for obtaining vibration of the hydraulic pump 18 disposed in the nacelle 4 and the hydraulic transmission controller 30c (described below) inside the nacelle 4 are connected to each other via the communication line 84. The vibration sensor 50 is configured to determine whether an abnormality of the wind turbine generator 100 is present, and to generate an abnormality determination signal. For instance, the vibration sensor 50 determines that a wind turbine generator 100 is not normal if the vibration level of the hydraulic pump 18 is the threshold value or more. The hydraulic transmission controller 30c receives the abnormality determination signal generated by the vibration sensor 50 from the vibration sensor 50 via the communication line 84. Then, the wind turbine generator 100 is configured to be operated on the basis of the abnormality determination signal received from the vibration sensor 50. For instance, if the abnormality determination signal received from the vibration sensor 50 represents that the wind turbine generator 100 is not normal, operation of the wind turbine generator 100 is stopped.

As described above, since the measurement unit 50 of the condition-monitoring system 500 and the control unit 30 of the supervisory control system 300 are connected by the communication line 84 which is independent from the information transmission medium for control 34 and the information transmission medium for measurement 54, communication between the control unit 30 and the measurement unit 50 via the communication line 84 is available while a state in which the information transmission medium for control 34 and the information transmission medium for measurement 54 are separated is maintained.

Further, since the measurement data measured by the measurement units 50 is used to control the wind turbine generator 100 by the control unit 30, the data obtained in the measurement can be utilized not only in the condition-monitoring system 500 but also in the supervisory control system 300.

Accordingly, it is possible to use the measurement data in the condition-monitoring system 500 also in the supervisory control system 300 effectively while maintaining the separation of the information transmission medium for control 34 and the information transmission medium for measurement 54.

In some embodiments, the communication line 84 provided independently from the information transmission medium for control 34 and the information transmission medium for measurement 54 is composed of CAN cables.

In one embodiment, as illustrated in FIG. 3, the supervisory control system 300 further includes a control-side accumulation part 36 configured to accumulate data to be transmitted from the control unit 30 to the SCADA server 32 at least temporarily. Alternately, the condition-monitoring system 500 further includes a measurement-side data accumulation part 56 configured to accumulate data to be transmitted from the measurement unit 50 to the CMS server 52 at least temporarily. If there is a failure in communication between the control unit 30 and the SCADA server 32, or between the measurement unit 50 and the CMS server 52, data which has failed to be transmitted to the SCADA server 32 or the CMS server 52 due to the failure in communication is accumulated in the control-side data accumulation part 36 or the measurement-side data accumulation part 56, and then, after recovery of the communication, the data accumulated in the control-side data accumulation part 36 or the measurement-side data accumulation part 56 is transmitted to the SCADA server 32 or the CMS server 52.

As described above, if data is not transmitted from the control unit 30 or the measurement unit 50 to the SCADA server 32 or the CMS server 52 due to a failure in communication, the data is accumulated in the control-side data accumulation part 36 or the measurement-side data accumulation part 56, and then the accumulated data is transmitted to the SCADA server 32 or the CMS server 52 after recovery of the communication. In this way, when there is a failure in communication between the control units 30 or the measurement units 50 disposed on the wind turbine generator 100 and the SCADA server 32 or the CMS server 52 disposed outside the wind turbine generator 100, it is possible to transmit information from the control units 30 or the measurement units 50 to the SCADA server or the CMS server without losing the information.

The control-side data accumulation part 36 or the measurement-side data accumulation part 56 may be disposed inside the tower.

Even when an abnormality has occurred to a long-distance cable connecting the control units 30 and the measurement units 50 disposed on the rotor hub 5 or the tower 2 and the SCADA server 32 and the CMS server 52 to cause a failure in communication in a case where the wind turbine generator 100 including the tower 2 is located at a place distant from a facility including the SCADA server 32 and the CMS server 52, it is possible to transmit information from the control units 30 or the measurement units 50 to the SCADA sever or the CMS server 50 without losing the information.

In one embodiment, as illustrated in FIGs. 2 and 3, the wind turbine generator 100 is disposed on the ocean, the SCADA server 32 and the CMS server 52 are disposed on the land, and the information transmission medium for control 34 and the information transmission medium for measurement 54 include cables 72A, 72B disposed under the ocean.

As described above, also in a case where the control units 30 or the measurement units 50 disposed on the ocean and the SCADA server 32 or the CMS server 52 disposed on the land are connected via the cables 72A, 72B disposed under the ocean, even when there is a failure in communication between the control units 30 or the measurement units 50 and the SCADA server 32 or the CMS server 52 such as a cutoff of the cables 72A, 72B, it is possible to transmit information from the control units 30 or the measurement units 50 to the SCADA server or the CMS server without losing the information.

In one embodiment, the wind turbine generator 100 is disposed on the land. In this case, the information transmission medium for control 34 and the information transmission medium for measurement 54 connecting the control units 30 and the measurement units 50 and the SCADA server 32 and the CMS server 52 may include a cable disposed on the ground or under the ground.

The supervisory control system 300 and the condition-monitoring system 500 may be respectively connected to the Internet 80 via routers 35, 55.

In this case, it is possible to monitor and control operation conditions or a state of the wind turbine generator 100 via the Internet from a place distant from the supervisory control system 300 and the condition-monitoring system 500.

In one embodiment, the supervisory control system 300 and the condition-monitoring system 500 may be connected to the Internet 80 via a shared router.

In this case, even though the information transmission medium for control 34 and the information transmission medium for measurement 54 are separated from each other, it is possible to simplify the configuration of devices constituting the supervisory control system 300 and the condition-monitoring system 500 because the supervisory control system 300 and the condition-monitoring system 500 are connected to the Internet via a shared router.

In one embodiment, at least one control unit 30 or at least measurement unit 50 is disposed on the rotor hub 5 of the wind turbine rotor 6, and the cables of the information transmission medium for control 34 or the information transmission medium for measurement 54 are disposed between the rotor hub 5 and the nacelle 4. In this case, to prevent the cables from twisting due to rotation of the rotor hub 5 with respect to the nacelle 4, a slip ring 26 may be used. The supervisory control system 300 and the condition-monitoring system 500 may use a shared slip ring 26.

In one embodiment, at least one control unit 30 or at least one measurement unit 50 is disposed on the rotor hub 5 or the wind turbine rotor 6, and the information transmission medium for control 34 or the information transmission medium for measurement 54 connecting the control unit 30 or the measurement unit 50 disposed on the rotor hub 5 and the SCADA server 32 or the CMS server 52 includes a wireless LAN.

In one embodiment, a pitch controller 30b (described below) for controlling the pitch angle of the blade 7 is disposed on the rotor hub 5 of the wind turbine rotor 6. In one embodiment, a strain sensor 50k for measuring strain of the blade 7 is disposed on the rotor hub 5 of the wind turbine rotor 6.

In this case, since a wireless LAN is used as the information transmission medium for control 34 or the information transmission medium for measurement 54 connecting the control unit 30 or the measurement unit 50 disposed on the rotor hub 5 and the SCADA server 32 or the CMS server 52, it is possible to dispense with cable arrangement of the information transmission medium for control 34 or the information transmission medium for measurement 54 between the rotor hub 5 and the nacelle 4. Thus, it is possible to form an information transmission path for control or an information transmission path for measurement between the rotor hub and the nacelle without a slip ring. In this way, it is possible to simplify the cable arrangement in the wind turbine generator 100.

In one embodiment, the control unit 30 includes a yaw controller 30a for controlling the yaw angle of the wind turbine generator 100 and a pitch controller 30b for controlling the pitch angle of the blade 7. The supervisory control system 300 is configured to control the output of the wind turbine generator 100 using the yaw controller 30a or the pitch controller 30b.

In this case, in the wind turbine generator 100 in which the output is controlled by the yaw control or the pitch control, even if data is congested in the information transmission medium for measurement 54 of the condition-monitoring system 500 which collects data related to vibration at a high sampling frequency, a failure does not occur in communication to cause communication delay in the information transmission medium for control 34 of the supervisory control system 300 due to the above data congestion in the information transmission medium for measurement 54. Thus, it is possible to control the output of the wind turbine generator 100 by the yaw control or the pitch control securely without causing a failure in communication at the control side (the supervisory control system 300 side) due to the overflow of data of the measurement side (the condition-monitoring system 500 side) in the transmission path.

Now, the output control of the wind turbine generator 100 using the pitch controller 30b and the yaw controller 30a will be described.

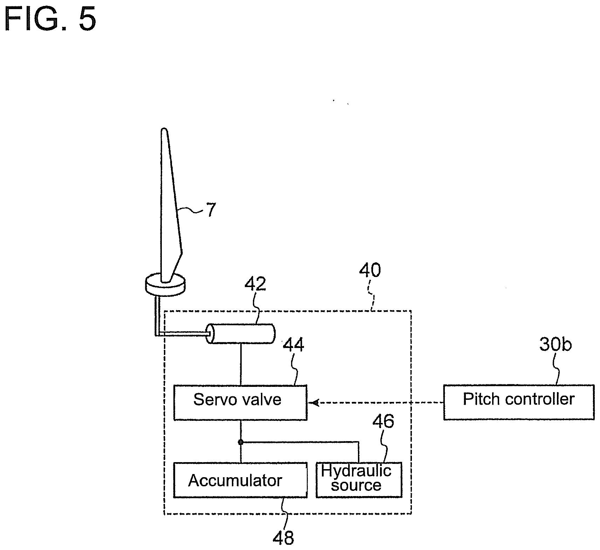

In one embodiment, to control the rotation speed of the wind turbine rotor 6, the pitch angle of the blade 7 mounted to the wind turbine rotor 6 is controlled using a pitch drive mechanism 40 illustrated in FIG. 5, and an aerodynamic braking force is applied to the wind turbine rotor 6.

FIG. 5 is a diagram of a configuration example of a pitch drive mechanism. The pitch drive mechanism 40 illustrated in FIG. 5 includes a hydraulic cylinder 42, a servo valve 44, a hydraulic source 46 and an accumulator 48. The pitch drive mechanism 40 is housed in a hub which houses the transmission 16 or the like of the wind turbine generator 100 illustrated in FIG. 1. The servo valve 44 adjusts the amount of high pressure oil supplied to the hydraulic cylinder. The high pressure oil is generated by the hydraulic source 46 or accumulated in an accumulator 48. The pitch drive device 40 is controlled by the pitch controller 30b so that the pitch angle of the blade 7 is adjusted to change the rotation speed of the wind turbine rotor 6, which enables adjustment of the output of the wind turbine generator 100.

Further, in one embodiment, to adjust the direction of the rotational plane of the wind turbine rotor 6, the yaw angle (yaw direction) of the nacelle 4 is controlled using the yaw controller 30a.

In one embodiment, the wind turbine generator 100 includes a yaw drive mechanism (not illustrated), so that it is possible to rotate the nacelle 4 to slew with respect to the tower 2 by operating the yaw drive mechanism based on a command from the yaw controller 30a.

In one embodiment, the yaw controller 30a determines a yaw angle of the nacelle 4 based on a wind direction obtained by an anemometer or the like. Then, to achieve the yaw angle, the nacelle 4 is rotated to slew with respect to the tower 2. It is possible to adjust the output of the wind turbine generator 100 by adjusting the direction of the rotational plane of the wind turbine rotor 6.

In one embodiment, the yaw controller 30a is disposed inside the nacelle 4. Further, in one embodiment, the pitch controller 30b is disposed inside the rotor hub 5.

In one embodiment, the control unit 30 includes a hydraulic transmission controller 30c for controlling a displacement of the hydraulic pump 18 or the hydraulic motor 20. The supervisory control system 300 is configured to control the output of the wind turbine generator 100 using the hydraulic transmission controller 30c.

In this case, in the wind turbine generator 100 in which the output is controlled by control of a displacement of the hydraulic pump 18 or the hydraulic motor 20, even when data is congested in the information transmission medium for measurement 54 of the condition-monitoring system 500 which collects data related to vibration or pressure at a high sampling frequency, a communication failure in the information transmission medium for control 34 of the supervisory control system 300 to cause delay in the communication due to the congestion of data in the information transmission medium for measurement 54. Thus, it is possible to control the output of the wind turbine generator 100 by control of the displacement of the hydraulic pump 18 or the hydraulic motor 20 without causing a failure in communication at the control side (supervisory control system 300 side) due to an overflow of data of the measurement side (condition-monitoring system 500 side) in the transmission path.

Now, the method of adjusting the displacement of the hydraulic pump 18 in one embodiment will be described.

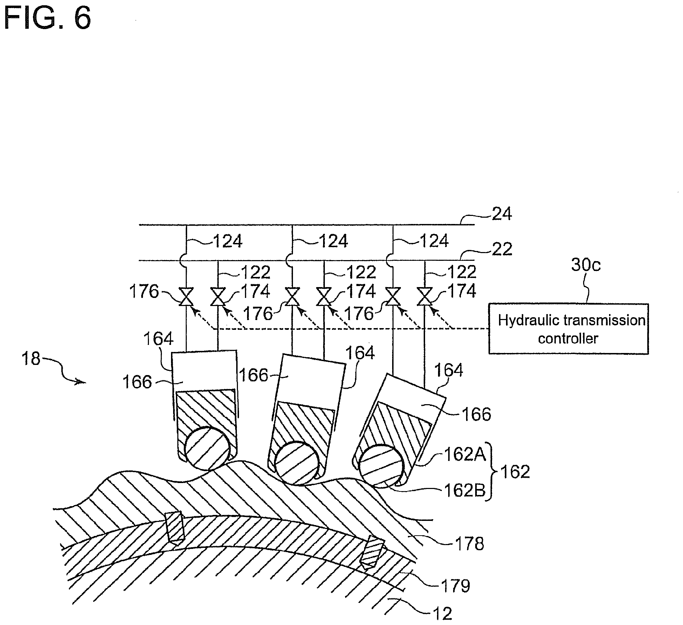

FIG. 6 is a diagram of a configuration example of a hydraulic pump. As illustrated in FIG. 6, the hydraulic pump 18 includes a plurality of working chambers 166 formed by respective cylinders 164 and pistons 162, a cam 178 having a cam curved surface which engages with the pistons 162, and high pressure valves 174 and low pressure valves 176 disposed on respective working chambers 166. In some embodiments, to operate smoothly in accordance with the cam curve of the cam 178, each piston 162 includes a piston body portion 162A which slides in the corresponding cylinder 164, and a piston roller 162B which is mounted to the piston body portion 162A and which engages with the cam curved surface of the cam 178. The cam 178 is mounted to the outer circumferential surface of the main shaft 12 via a cam attachment vase 179. Each high pressure valve 174 is disposed in a high pressure communication channel 122 disposed between each working chamber 164 and the high pressure line 22. On the other hand, each low pressure valve 176 is disposed in a low pressure communication channel 124 disposed between each working chamber 164 and the low pressure line 24. The opening/closing timings of the high pressure valve 174 and the low pressure valve 176 are controlled by the hydraulic transmission controller 30c.

For instance, to set the displacement of the hydraulic pump 18 having the above configuration at a minimum value, the hydraulic transmission controller 30c may control the high pressure valves 174 and the low pressure valves 176 so that all working chambers 164 of the hydraulic pump 18 become non active. In one embodiment, the hydraulic transmission controller 30c causes the working chambers 164 to become inactive by performing a control to maintain a state in which the high pressure valves 174 are closed and the low pressure valves 176 are open so that the pressure of the working oil does not increase, during a cycle in which each piston 162 ascends from the bottom dead center to the top dead center and returns to the bottom dead center in the corresponding working chamber 164.

In one embodiment, the hydraulic transmission controller 30c may control the displacement of the hydraulic transmission 16 by controlling the opening/closing timing of the high pressure valves 174 and the low pressure valves 176 corresponding to the respective working chambers 164, to adjust a ratio of active working chambers 164 to non-active working chambers 164.

While the above description refers to the configuration of the hydraulic pump 18 and the method of adjusting the displacement of the hydraulic pump 18, the same configuration and method may be applied to the hydraulic motor 20. Thus, the hydraulic motor is not described in detail.

In one embodiment, the hydraulic transmission controller 30c is disposed in the nacelle 4.

In one embodiment, the SCADA server 32 or the CMS server 52 is configured to process data received from the control units 30 or the measurement units 50 statistically. At least one of the supervisory control system 300 or the condition-monitoring system 500 further includes a display part 38 for displaying a time-series change of data which has been processed statistically by the SCADA server 32 or the CMS server 52.

In this case, data from the control units 30 or the measurement units 50 is processed statistically, and the time-series change of the statistically processed data is displayed visually as, for instance, a graph. Thus, it is possible to determine the trend of change in the operation conditions or the condition of the wind turbine generator 100 easily.

In one embodiment, the client terminal 82 connected to the supervisory control system 300 or the condition-monitoring system 500 via the Internet 80 may include a display part so that the time-series change of the data statistically processed by the SCADA server 32 or the CMS server 52 is displayed on the display part.

Embodiments of the present invention were described in detail above, but the present invention is not limited thereto, and various amendments and modifications may be implemented within a scope that does not depart from the present invention.

In the present specification, expressions such as "comprise", "include", "have", "contain" and "constitute" are not intended to be exclusive of other components.

## Claims

1. A wind turbine power generation facility (1), comprising:
a wind turbine generator (100) including a tower (2), a nacelle (4) disposed on an upper part of the tower (2) and supported on the tower (2), a wind turbine rotor (6) supported rotatably on the nacelle (4), and a generator (8) configured to be driven by rotation energy of the wind turbine rotor (6); further comprising
a supervisory control system (300) for controlling operation of the wind turbine generator (100), including at least one control unit (30) disposed on a rotor hub (5) of the wind turbine rotor (6) or on the nacelle (4), a SCADA server (32) disposed outside the wind turbine generator (100) for receiving and processing information from the control unit (30), and an information transmission medium for control (34) connecting the at least one control unit (30) and the SCADA server (32); and
a condition-monitoring system (500) including at least one measurement unit (50) disposed on the rotor hub (5) or the nacelle (4), a CMS server (52) disposed outside the wind turbine generator (100) for receiving and processing information from the at least one measurement unit (50), and an information transmission medium for measurement (54) connecting the at least one measurement unit (50) and the CMS server (52), the condition-monitoring system (500) being configured to collect at least data related to vibration of the wind turbine generator (100) by the at least one measurement unit (50) and to monitor a condition of the wind turbine generator (100) on the basis of the data related to the vibration, **characterized in that** the information transmission medium for control (34) and the information transmission medium for measurement (54) are separated from each other,
wherein the supervisory control system (300) further includes a control-side data accumulation part (36) disposed inside the tower (2) and configured to accumulate data to be transmitted from the control unit (30) to the SCADA server (32) at least temporarily, or the condition-monitoring system (500) further includes a measurement-side data accumulation part (56) disposed inside the tower (2) and configured to accumulate data to be transmitted from the measurement unit (50) to the CMS server (52) at least temporarily, and
wherein the wind turbine power generation facility (1) is configured to accumulate data failing to be transmitted to the SCADA server (32) or the CMS server (52) due to the failure in the communication in the control-side data accumulation part (36) or the measurement-side data accumulation part (56), and to transmit the data accumulated in the control-side data accumulation part (36) or the measurement-side data accumulation part (56) to the SCADA server (32) or the CMS server (52) after recovery of the communication, if there is a failure in communication between the control unit (30) and the SCADA server (32) or between the measurement unit (50) and the CMS server (52).

2. The wind turbine power generation facility (1) according to claim 1,
wherein the information transmission medium for control (34) and the information transmission medium for measurement (54) are each arranged so as to extend through an inside of the tower (2).

3. The wind turbine power generation facility (1) according to claim 1 or 2,
wherein the at least one measurement unit (50) includes a vibration sensor (50a - 50g) for measuring vibration of at least one of the generator (8) or a drivetrain (10) for transmitting the rotation energy of the wind turbine rotor (6) to the generator (8), and
wherein the data related to the vibration of the wind turbine generator (100) includes data based on a measurement result of the vibration sensor (50a; 50b).

4. The wind turbine power generation facility (1) according to claim 3,
wherein the drivetrain (10) includes a main shaft (12) connected to the rotor hub (5) of the wind turbine rotor (6), a main bearing (14) which supports the main shaft (12) rotatably, and a transmission (16) disposed between the main shaft (12) and the generator (8), and
wherein the vibration sensor (50a - 50g) is configured to measure vibration of at least one of the main shaft (12), the main bearing (14) or the transmission (16).

5. The wind turbine power generation facility (1) according to claim 4,
wherein the transmission (16) includes a hydraulic pump (18) configured to be driven by the main shaft (12) to pressurize working oil and generate pressurized oil, a hydraulic motor (20) configured to be driven by the pressurized oil generated by the hydraulic pump (18), a high pressure line (22) connecting an outlet side of the hydraulic pump (18) and an inlet side of the hydraulic motor (20), and a low pressure line (24) connecting an outlet side of the hydraulic motor (20) and an inlet side of the hydraulic pump (18), and
wherein the vibration sensor (50a - 50g) is configured to measure vibration of at least one of the hydraulic pump (18), the hydraulic motor (20), the high pressure line (22) or the low pressure line (24).

6. The wind turbine power generation facility (1) according to any one of claims 1 to 5,
wherein the wind turbine generator (100) includes a hydraulic pump (18) configured to be driven by the rotation energy of the wind turbine rotor (6), a hydraulic motor (20) configured to be driven by pressurized oil generated by the hydraulic pump (18) and to input mechanical energy to the generator (8), a high pressure line (22) connecting an outlet side of the hydraulic pump (18) and an inlet side of the hydraulic motor (20), and a low pressure line (24) connecting an outlet side of the hydraulic motor (20) and an inlet side of the hydraulic pump (18),
wherein each of the hydraulic pump (18) and the hydraulic motor (20) includes a rotation shaft (60), a piston (62) configured to reciprocate in relation to rotation of the rotation shaft (60), and a cylinder (64) forming a working chamber together with the piston (62),
wherein the at least one measurement unit (50) includes a pressure sensor (50h - 50j) for measuring a pressure inside at least one of the cylinder (64) of the hydraulic pump (18), the cylinder (64) of the hydraulic motor (20), the high pressure line (22) or the low pressure line (24), and
wherein the condition-monitoring system (500) is configured to further collect data based on a measurement result by the pressure sensor (50h - 50j) and to monitor the condition of the wind turbine generator (100) on the basis of the data based on the measurement result of the pressure sensor (50h - 50j).

7. The wind turbine power generation facility (1) according to any one of claims 1 to 6,
wherein the measurement unit (50) and the control unit (30) are connected to each other via a communication line (84) disposed independently from the information transmission medium for control (34) and the information transmission medium for measurement (54),
wherein the measurement unit (50) is configured to determine whether an abnormality of the wind turbine generator (100) is present on the basis of the data related to the vibration and to generate an abnormality determination signal, and
wherein the control unit (30) is configured to receive the abnormality determination signal from the measurement unit (50) via the communication line (84) and to control the operation of the wind turbine generator (100) on the basis of the abnormality determination signal.

8. The wind turbine power generation facility (1) according to claim 7,
wherein the information transmission medium for control (34) and the information transmission medium for measurement (54) are each composed of Ethernet cables, and
wherein the communication line (84) is composed of CAN cables.

9. The wind turbine power generation facility (1) according to any one of claims 1 to 8,
wherein each of the at least one control unit (30) is not connected to the information transmission medium for measurement (54) and each of the at least one measurement unit (50) is not connected to the information transmission medium for control (34).

10. The wind turbine power generation facility (1) according to any one of claims 1 to 9,
wherein the wind turbine generator (100) is placed on a body of water,
wherein the SCADA server (32) and the CMS server (52) are placed on land, and
wherein the information transmission medium for control (34) and the information transmission medium for measurement (54) each include a cable disposed underwater.

11. The wind turbine power generation facility (1) according to any one of claims 1 to 10,
wherein each of the supervisory control system (300) and the condition-monitoring system (500) is connected to the Internet via a router.

12. The wind turbine power generation facility (1) according to any one of claims 1 to 11,
wherein the at least one control unit (30) or the at least one measurement unit (50) is disposed on the rotor hub (5), and
wherein the information transmission medium for control (34) or the information transmission medium for measurement (54) connecting the control unit (30) or the measurement unit (50) disposed on the rotor hub (5) and the SCADA server (32) or the CMS server (52) includes a wireless LAN.

13. The wind turbine power generation facility (1) according to any one of claims 1 to 12,
wherein the control unit (30) includes a yaw controller (30a) for controlling a yaw angle of the wind turbine generator (100) and a pitch controller (30b) for controlling a pitch angle of at least one blade (7) mounted to the rotor hub (5), and
wherein the supervisory control system (300) is configured to control an output of the wind turbine generator (100) using the yaw controller (30a) or the pitch controller (30b).

14. The wind turbine power generation facility (1) according to claim 5 or 6,
wherein the control unit (30) includes a hydraulic transmission controller (30c) for controlling a displacement of the hydraulic pump (18) or the hydraulic motor (20), and
wherein the supervisory control system (300) is configured to control an output of the wind turbine generator (100) using the hydraulic transmission controller (30c).

15. The wind turbine power generation facility (1) according to any one of claims 1 to 14,
wherein the SCADA server (32) or the CMS server (52) is configured to perform a statistical processing on the data received from the control unit (30) or the measurement unit (50), and
wherein at least one of the supervisory control system (300) or the condition-monitoring system (500) further includes a display part (38) for displaying a time-series change of the statistically processed data.

## Patentansprüche

1. Windkraftstromerzeugungseinrichtung (1), umfassend
einen Windkraftanlagengenerator (100), umfassend einen Mast (2), eine Gondel (4), die an einem oberen Teil des Mastes (2) angeordnet ist und auf dem Mast (2) gestützt wird, einen Windkraftanlagenrotor (6), der drehbar auf der Gondel (4) gestützt wird, und einen Generator (8), der dafür konfiguriert ist, durch Rotationsenergie des Windkraftanlagenrotors (6) angetrieben zu werden, ferner umfassend
ein Beaufsichtigungs-Steuerungssystem (300) zum Steuern des Betriebes des Windkraftanlagengenerators (100), das mindestens eine Steuereinheit (30), die an einer Rotornabe (5) des Windkraftanlagenrotors (6) oder an der Gondel (4) angeordnet ist, einen SCADA-Server (32), der außerhalb des Windkraftanlagengenerators (100) angeordnet ist, zum Empfangen und Verarbeiten von Informationen von der Steuereinheit (30), und ein Informationsübertragungsmedium zur Steuerung (34), das die mindestens eine Steuereinheit (30) und den SCADA-Server (32) verbindet, enthält und
ein Zustandsüberwachungssystem (500), das mindestens eine Messeinheit (50), die an der Rotornabe (5) oder der Gondel (4) angeordnet ist, einen CMS-Server (52), der außerhalb des Windkraftanlagengenerators (100) angeordnet ist, zum Empfangen und Verarbeiten von Informationen von der mindestens einen Messeinheit (50), und ein Informationsübertragungsmedium zum Messen (54), das die mindestens eine Messeinheit (50) und den CMS-Server (52) verbindet, wobei das Zustandsüberwachungssystem (500) dafür konfiguriert ist, mindestens Daten im Zusammenhang mit Vibrationen des Windkraftanlagengenerators (100) durch die mindestens eine Messeinheit (50) zu erfassen und einen Zustand des Windkraftanlagengenerators (100) auf der Basis der Daten im Zusammenhang mit Vibrationen zu überwachen, enthält,
**dadurch gekennzeichnet, dass**
das Informationsübertragungsmedium zur Steuerung (34) und das Informationsübertragungsmedium zum Messen (54) voneinander getrennt sind,
wobei das Beaufsichtigungs-Steuerungssystem (300) ferner einen steuerungsseitigen Datensammlungsteil (36) enthält, der im Inneren des Mastes (2) angeordnet ist und dafür konfiguriert ist, mindestens vorübergehend Daten zu sammeln, die von der Steuereinheit (30) an den SCADA-Server (32) übertragen werden sollen, oder wobei das Zustandsüberwachungssystem (500) ferner einen messungsseitigen Datensammlungsteil (56) enthält, der im Inneren des Mastes (2) angeordnet und dafür konfiguriert ist, mindestens vorübergehend Daten zu sammeln, die von der Messeinheit (50) an den CMS-Server (52) übertragen werden sollen, und
wobei die Windkraftstromerzeugungseinrichtung (1) dafür konfiguriert ist, Daten zu sammeln, die aufgrund eines Ausfalls der Kommunikation in dem steuerungsseitigen Datensammlungsteil (36) oder dem messungsseitigen Datensammlungsteil (56) nicht zu dem SCADA-Server (32) oder dem CMS-Server (52) übertragen werden, und die Daten, die in dem steuerungsseitigen Datensammlungsteil (36) oder dem messungsseitigen Datensammlungsteil (56) gesammelt wurden, nach der Wiederherstellung der Kommunikation an den SCADA-Server (32) oder den CMS-Server (52) zu senden, wenn es einen Kommunikationsausfall zwischen der Steuereinheit (30) und dem SCADA-Server (32) oder zwischen der Messeinheit (50) und dem CMS-Server (52) gibt.

2. Windkraftstromerzeugungseinrichtung (1) nach Anspruch 1,
wobei das Informationsübertragungsmedium zur Steuerung (34) und das Informationsübertragungsmedium zum Messen (54) jeweils so angeordnet sind, dass sie durch das Innere des Mastes (2) hindurch verlaufen.

3. Windkraftstromerzeugungseinrichtung (1) nach Anspruch 1 oder 2,
wobei die mindestens eine Messeinheit (50) einen Vibrationssensor (50a-50g) zum Messen von Vibrationen des Generators (8) und/oder eines Antriebsstrangs (10) zum Übertragen der Rotationsenergie des Windkraftanlagenrotors (6) zu dem Generator (8) enthält, und
wobei die Daten im Zusammenhang mit den Vibrationen des Windkraftanlagengenerators (100) Daten auf der Grundlage eines Messergebnisses des Vibrationssensors (50a, 50b) enthält.

4. Windkraftstromerzeugungseinrichtung (1) nach Anspruch 3,
wobei der Antriebsstrang (10) eine Hauptwelle (12), die mit der Rotornabe (5) des Windkraftanlagenrotors (6) verbunden ist, ein Hauptlager (14), das die Hauptwelle (12) drehbar stützt, und ein Getriebe (16), das zwischen der Hauptwelle (12) und dem Generator (8) angeordnet ist, umfasst und
wobei der Vibrationssensor (50a-50g) dafür konfiguriert ist, Vibrationen von mindestens einem der Hauptwelle (12), des Hauptlagers (14) oder des Getriebes (16) zu messen.

5. Windkraftstromerzeugungseinrichtung (1) nach Anspruch 4,
wobei das Getriebe (16) eine Hydraulikpumpe (18), die dafür konfiguriert ist, durch die Hauptwelle (12) angetrieben zu werden, um Arbeitsöl mit Druck zu beaufschlagen und druckbeaufschlagtes Öl zu erzeugen, einen Hydraulikmotor (20), der dafür konfiguriert ist, durch das druckbeaufschlagte Öl angetrieben zu werden, das durch die Hydraulikpumpe (18) erzeugt wird, eine Hochdruckleitung (22), die eine Auslassseite der Hydraulikpumpe (18) und eine Einlassseite des Hydraulikmotors (20) verbindet, und eine Niederdruckleitung (24), die eine Auslassseite des Hydraulikmotors (20) und eine Einlassseite der Hydraulikpumpe (18) verbindet, umfasst und
wobei der Vibrationssensor (50a-50g) dafür konfiguriert ist, Vibrationen von mindestens einem der Hydraulikpumpe (18), des Hydraulikmotors (20), der Hochdruckleitung (22) oder der Niederdruckleitung (24) zu messen.

6. Windkraftstromerzeugungseinrichtung (1) nach einem der Ansprüche 1 bis 5,
wobei der Windkraftanlagengenerator (100) eine Hydraulikpumpe (18), die dafür konfiguriert ist, durch die Rotationsenergie des Windkraftanlagenrotors (6) angetrieben zu werden, einen Hydraulikmotor (20), der dafür konfiguriert ist, durch druckbeaufschlagtes Öl angetrieben zu werden, das durch die Hydraulikpumpe (18) erzeugt wird, und mechanische Energie an den Generator (8) anzulegen, eine Hochdruckleitung (22), die eine Auslassseite der Hydraulikpumpe (18) und eine Einlassseite des Hydraulikmotors (20) verbindet, und eine Niederdruckleitung (24), die eine Auslassseite des Hydraulikmotors (20) und eine Einlassseite der Hydraulikpumpe (18) verbindet, umfasst,
wobei sowohl die Hydraulikpumpe (18) als auch der Hydraulikmotor (20) eine Rotationswelle (60), einen Kolben (62), der dafür konfiguriert ist, sich relativ zur Rotation der Rotationswelle (60) zu hin und her zu bewegen, und einen Zylinder (64), der zusammen mit dem Kolben (62) eine Arbeitskammer bildet, umfassen,
wobei die mindestens eine Messeinheit (50) einen Drucksensor (50h-50j) zum Messen eines Drucks im Inneren mindestens eines des Zylinders (64) der Hydraulikpumpe (18), des Zylinders (64) des Hydraulikmotors (20), der Hochdruckleitung (22) und der Niederdruckleitung (24) enthält, und
wobei das Zustandsüberwachungssystem (500) dafür konfiguriert ist, ferner Daten auf der Grundlage eines Messergebnisses durch den Drucksensor (50h-50j) zu sammeln und den Zustand des Windkraftanlagengenerators (100) auf der Grundlage der Daten auf der Grundlage des Messergebnisses des Drucksensors (50h-50j) zu überwachen.

7. Windkraftstromerzeugungseinrichtung (1) nach einem der Ansprüche 1 bis 6,
wobei die Messeinheit (50) und die Steuereinheit (30) über eine Kommunikationsleitung (84) miteinander verbunden sind, die unabhängig von dem Informationsübertragungsmedium zur Steuerung (34) und dem Informationsübertragungsmedium zum Messen (54) angeordnet sind,
wobei die Messeinheit (50) dafür konfiguriert ist, auf der Grundlage der Daten im Zusammenhang mit den Vibrationen zu bestimmen, ob eine Anomalie des Windkraftanlagengenerators (100) vorliegt, und ein Anomaliebestimmungssignal zu generieren, und
wobei die Steuereinheit (30) dafür konfiguriert ist, das Anomaliebestimmungssignal von der Messeinheit (50) über die Kommunikationsleitung (84) zu empfangen und den Betrieb des Windkraftanlagengenerators (100) auf der Grundlage des Anomaliebestimmungssignals zu steuern.

8. Windkraftstromerzeugungseinrichtung (1) nach Anspruch 7,
wobei das Informationsübertragungsmedium zur Steuerung (34) und das Informationsübertragungsmedium zum Messen (54) jeweils aus Ethernet-Kabeln bestehen und
wobei die Kommunikationsleitung (84) aus CAN-Kabeln besteht.

9. Windkraftstromerzeugungseinrichtung (1) nach einem der Ansprüche 1 bis 8,
wobei keine der mindestens einen Steuereinheit (30) mit dem Informationsübertragungsmedium zum Messen (54) verbunden ist und keine der mindestens einen Messeinheit (50) mit dem Informationsübertragungsmedium zur Steuerung (34) verbunden ist.

10. Windkraftstromerzeugungseinrichtung (1) nach einem der Ansprüche 1 bis 9,
wobei der Windkraftanlagengenerator (100) auf einem Gewässer angeordnet ist,
wobei der SCADA-Server (32) und der CMS-Server (52) an Land angeordnet sind und
wobei das Informationsübertragungsmedium zur Steuerung (34) und das Informationsübertragungsmedium zum Messen (54) jeweils ein Kabel enthalten, das unter Wasser angeordnet ist.

11. Windkraftstromerzeugungseinrichtung (1) nach einem der Ansprüche 1 bis 10,
wobei sowohl das Beaufsichtigungs-Steuerungssystem (300) als auch das Zustandsüberwachungssystem (500) mit dem Internet über einen Router verbunden sind.

12. Windkraftstromerzeugungseinrichtung (1) nach einem der Ansprüche 1 bis 11,
wobei die mindestens eine Steuereinheit (30) oder die mindestens eine Messeinheit (50) an der Rotornabe (5) angeordnet ist und
wobei das Informationsübertragungsmedium zur Steuerung (34) oder das Informationsübertragungsmedium zum Messen (54), die die Steuereinheit (30) oder die Messeinheit (50), die an der Rotornabe (5) angeordnet ist, und den SCADA-Server (32) oder den CMS-Server (52) verbinden, ein drahtloses LAN enthält.

13. Windkraftstromerzeugungseinrichtung (1) nach einem der Ansprüche 1 bis 12,
wobei die Steuereinheit (30) eine Giersteuereinheit (30a) zum Steuern eines Gierwinkels des Windkraftanlagengenerators (100), und eine Anstellsteuereinheit (30b) zum Steuern eines Anstellwinkels mindestens eines Blattes (7), das an der Rotornabe (5) montiert ist, umfasst und
wobei das Beaufsichtigungs-Steuerungssystem (300) dafür konfiguriert ist, eine Ausgangsleistung des Windkraftanlagengenerators (100) unter Verwendung der Giersteuereinheit (30a) oder der Anstellsteuereinheit (30b) zu steuern.

14. Windkraftstromerzeugungseinrichtung (1) nach Anspruch 5 oder 6,
wobei die Steuereinheit (30) eine Hydraulikkraftübertragungs-Steuereinheit (30c) zum Steuern einer Fördermenge der Hydraulikpumpe (18) oder des Hydraulikmotors (20) enthält und
wobei das Beaufsichtigungs-Steuerungssystem (300) dafür konfiguriert ist, eine Ausgangsleistung des Windkraftanlagengenerators (100) unter Verwendung der Hydraulikkraftübertragungs-Steuereinheit (30c) zu steuern.

15. Windkraftstromerzeugungseinrichtung (1) nach einem der Ansprüche 1 bis 14,
wobei der SCADA-Server (32) oder der CMS-Server (52) dafür konfiguriert ist, eine statistische Verarbeitung der Daten auszuführen, die von der Steuereinheit (30) oder der Messeinheit (50) empfangen werden, und
wobei mindestens eines des Beaufsichtigungs-Steuerungssystems (300) und des Zustandsüberwachungssystems (500) ferner einen Anzeigeteil (38) zum Anzeigen einer Zeitreihenänderung der statistisch verarbeiteten Daten enthält.

## Revendications

1. Installation de génération d'énergie éolienne (1), comportant :
une éolienne (100) comprenant une tour (2), une nacelle (4) disposée sur une partie supérieure de la tour (2) et supportée sur la tour (2), un rotor d'éolienne (6) supporté de manière rotative sur la nacelle (4), et une génératrice (8) configurée pour être entraînée par de l'énergie de rotation du rotor d'éolienne (6) ; comportant en outre
un système de commande de supervision (300) destiné à commander un fonctionnement de l'éolienne (100), comprenant au moins une unité de commande (30) disposée sur un moyeu de rotor (5) du rotor d'éolienne (6) ou sur la nacelle (4), un serveur SCADA (32) disposé à l'extérieur de l'éolienne (100) pour recevoir et traiter de l'information provenant de l'unité de commande (30), et un médium de transmission d'information pour la commande (34) reliant la au moins une unité de commande (30) et le serveur SCADA (32) ; et
un système de surveillance de condition (500) comprenant au moins une unité de mesure (50) disposée sur le moyeu de rotor (5) ou la nacelle (4), un serveur CMS (52) disposé à l'extérieur de l'éolienne (100) pour recevoir et traiter de l'information provenant de la au moins une unité de mesure (50), et un médium de transmission d'information pour la mesure (54) reliant la au moins une unité de mesure (50) et le serveur CMS (52), le système de surveillance de condition (500) étant configuré pour collecter au moins des données liées à une vibration de l'éolienne (100) grâce à la au moins une unité de mesure (50) et pour surveiller une condition de l'éolienne (100) sur la base des données liées à la vibration,
**caractérisée en ce que**
le médium de transmission d'information pour la commande (34) et le médium de transmission d'information pour la mesure (54) sont séparés l'un de l'autre,
dans laquelle le système de commande de supervision (300) comprend en outre une partie d'accumulation de données du côté commande (36) disposée à l'intérieur de la tour (2) et configurée pour accumuler des données devant être transmise depuis l'unité de commande (30) jusqu'au serveur SCADA (32) au moins temporairement, ou bien le système de surveillance de condition (500) comprend en outre une partie d'accumulation de données du côté mesure (56) disposée à l'intérieur de la tour (2) et configurée pour accumuler des données devant être transmise depuis l'unité de mesure (50) jusqu'au serveur CMS (52) au moins temporairement, et
dans laquelle l'installation de génération d'énergie éolienne (1) est configurée pour accumuler des données qui n'arrivent pas à être transmises au serveur SCADA (32) ou au serveur CMS (52) du fait d'une défaillance de la communication dans la partie d'accumulation de données du côté commande (36) ou la partie d'accumulation de données du côté mesure (56), et pour transmettre les données accumulées dans la partie d'accumulation de données du côté commande (36) ou la partie d'accumulation de données du côté mesure (56) au serveur SCADA (32) ou au serveur CMS (52) après récupération de la communication, s'il y a une panne de communication entre l'unité de commande (30) et le serveur SCADA (32) ou entre l'unité de mesure (50) et le serveur CMS (52).

2. Installation de génération d'énergie éolienne (1) selon la revendication 1,
dans laquelle le médium de transmission d'information pour la commande (34) et le médium de transmission d'information pour la mesure (54) sont disposés chacun de façon à s'étendre à travers un intérieur de la tour (2).

3. Installation de génération d'énergie éolienne (1) selon la revendication 1 ou 2,
dans laquelle la au moins une unité de mesure (50) comprend un capteur de vibration (50a à 50g) destiné à mesurer une vibration d'au moins une parmi la génératrice (8) ou une transmission (10) destinée à transmettre l'énergie de rotation du rotor d'éolienne (6) à la génératrice (8), et
dans laquelle les données liées à la vibration de l'éolienne (100) comprennent des données basées sur un résultat de mesure du capteur de vibration (50a ; 50b).

4. Installation de génération d'énergie éolienne (1) selon la revendication 3,
dans laquelle la transmission (10) comprend un arbre principal (12) relié au moyeu de rotor (5) du rotor d'éolienne (6), un palier principal (14) qui supporte l'arbre principal (12) de façon rotative, et une transmission (16) disposée entre l'arbre principal (12) et la génératrice (8), et
dans laquelle le capteur de vibration (50a à 50g) est configuré pour mesurer une vibration d'au moins un parmi l'arbre principal (12), le palier principal (14) ou la transmission (16).

5. Installation de génération d'énergie éolienne (1) selon la revendication 4,
dans laquelle la transmission (16) comprend une pompe hydraulique (18) configurée pour être entraînée par l'arbre principal (12) pour mettre en pression de l'huile de travail et pour générer de l'huile sous pression, un moteur hydraulique (20) configuré pour être entraîné par l'huile sous pression générée par la pompe hydraulique (18), une conduite haute pression (22) reliant un côté de sortie de la pompe hydraulique (18) et un côté d'entrée du moteur hydraulique (20), et une conduite basse pression (24) reliant un côté de sortie du moteur hydraulique (20) et un côté d'entrée de la pompe hydraulique (18), et
dans laquelle le capteur de vibration (50a à 50g) est configuré pour mesurer une vibration d'au moins un parmi la pompe hydraulique (18), le moteur hydraulique (20), la conduite haute pression (22) ou la conduite basse pression (24).

6. Installation de génération d'énergie éolienne (1) selon l'une quelconque des revendications 1 à 5,
dans laquelle l'éolienne (100) comprend une pompe hydraulique (18) configurée pour être entraînée par l'énergie de rotation du rotor d'éolienne (6), un moteur hydraulique (20) configuré pour être entraîné par de l'huile sous pression générée par la pompe hydraulique (18) et pour entrer de l'énergie mécanique dans la génératrice (8), une conduite haute pression (22) reliant un côté de sortie de la pompe hydraulique (18) et un côté d'entrée du moteur hydraulique (20), et une conduite basse pression (24) reliant un côté de sortie du moteur hydraulique (20) et un côté d'entrée de la pompe hydraulique (18),
dans laquelle chacun de la pompe hydraulique (18) et du moteur hydraulique (20) comprend un arbre de rotation (60), un piston (62) configuré pour se déplacer en va-et-vient en relation avec une rotation de l'arbre de rotation (60), et un cylindre (64) formant une chambre de travail avec le piston (62),
dans laquelle la au moins une unité de mesure (50) comprend un capteur de pression (50h à 50j) destiné à mesurer une pression à l'intérieur d'au moins un parmi le cylindre (64) de la pompe hydraulique (18), le cylindre (64) du moteur hydraulique (20), la conduite haute pression (22) ou la conduite basse pression (24), et
dans laquelle le système de surveillance de condition (500) est configuré pour collecter en outre des données sur la base d'un résultat de mesure par le capteur de pression (50h à 50j) et pour surveiller la condition de l'éolienne (100) sur la base des données basées sur le résultat de mesure du capteur de pression (50h à 50j).

7. Installation de génération d'énergie éolienne (1) selon l'une quelconque des revendications 1 à 6,
dans laquelle l'unité de mesure (50) et l'unité de commande (30) sont reliées l'une à l'autre par l'intermédiaire d'une ligne de communication (84) disposée indépendamment du médium de transmission d'information pour la commande (34) et du médium de transmission d'information pour la mesure (54),
dans laquelle l'unité de mesure (50) est configurée pour déterminer si une anomalie de l'éolienne (100) est présente sur la base des données liées à la vibration et pour générer un signal de détermination d'anomalie, et
dans laquelle l'unité de commande (30) est configurée pour recevoir le signal de détermination d'anomalie provenant de l'unité de mesure (50) par l'intermédiaire de la ligne de communication (84) et pour commander le fonctionnement de l'éolienne (100) sur la base du signal de détermination d'anomalie.

8. Installation de génération d'énergie éolienne (1) selon la revendication 7,
dans laquelle le médium de transmission d'information pour la commande (34) et le médium de transmission d'information pour la mesure (54) sont composés chacun de câbles Ethernet, et
dans laquelle la ligne de communication (84) se compose de câbles CAN.

9. Installation de génération d'énergie éolienne (1) selon l'une quelconque des revendications 1 à 8,
dans laquelle chacune de la au moins une unité de commande (30) n'est pas reliée au médium de transmission d'information pour la mesure (54) et chacune de la au moins une unité de mesure (50) n'est pas reliée au médium de transmission d'information pour la commande (34).

10. Installation de génération d'énergie éolienne (1) selon l'une quelconque des revendications 1 à 9,
dans laquelle l'éolienne (100) est placée sur une étendue d'eau,
dans laquelle le serveur SCADA (32) et le serveur CMS (52) sont placés sur la terre, et
dans laquelle le médium de transmission d'information pour la commande (34) et le médium de transmission d'information pour la mesure (54) comprennent chacun un câble disposé sous l'eau.

11. Installation de génération d'énergie éolienne (1) selon l'une quelconque des revendications 1 à 10,
dans laquelle chacun du système de commande de supervision (300) et du système de surveillance de condition (500) est relié à Internet par l'intermédiaire d'un routeur.

12. Installation de génération d'énergie éolienne (1) selon l'une quelconque des revendications 1 à 11,
dans laquelle la au moins une unité de commande (30) ou la au moins une unité de mesure (50) est disposée sur le moyeu de rotor (5), et
dans laquelle le médium de transmission d'information pour la commande (34) ou le médium de transmission d'information pour la mesure (54) reliant l'unité de commande (30) ou l'unité de mesure (50) disposée sur le moyeu de rotor (5) et le serveur SCADA (32) ou le serveur CMS (52) comprend un LAN sans fil.

13. Installation de génération d'énergie éolienne (1) selon l'une quelconque des revendications 1 à 12,
dans laquelle l'unité de commande (30) comprend un dispositif de commande de lacet (30a) destiné à commander un angle de lacet de l'éolienne (100) et un dispositif de commande de pas (30b) destiné à commander un angle de pas d'au moins une pale (7) montée sur le moyeu de rotor (5), et
dans laquelle le système de commande de supervision (300) est configuré pour commander une sortie de l'éolienne (100) en utilisant le dispositif de commande de lacet (30a) ou le dispositif de commande de pas (30b).

14. Installation de génération d'énergie éolienne (1) selon la revendication 5 ou 6,
dans laquelle l'unité de commande (30) comprend un dispositif de commande de transmission hydraulique (30c) pour commander un déplacement de la pompe hydraulique (18) ou du moteur hydraulique (20), et
dans laquelle le système de commande de supervision (300) est configuré pour commander une sortie de l'éolienne (100) en utilisant le dispositif de commande de transmission hydraulique (30c).

15. Installation de génération d'énergie éolienne (1) selon l'une quelconque des revendications 1 à 14,
dans laquelle le serveur SCADA (32) ou le serveur CMS (52) est configuré pour réaliser un traitement statistique sur les données reçues de l'unité de commande (30) ou de l'unité de mesure (50), et
dans laquelle au moins un du système de commande de supervision (300) ou du système de surveillance de condition (500) comprend en outre une partie d'affichage (38) pour afficher un changement dans le temps des données statistiquement traitées.
